# EUROPÄISCHE PATENTSCHRIFT

(11) **EP 3 057 804 B1**
(45) Veröffentlichungstag und Bekanntmachung des Hinweises auf die Patenterteilung: **19.08.2020**
(21) Anmeldenummer: 14789188.1
(22) Anmeldetag: 01.10.2014
(51) Int. Cl.: B44C 1/17, B41M 1/24, B41F 19/06, C03C 17/00

(54) **VERFAHREN ZUR DEKORATION VON SUBSTRATEN SOWIE DEKORIERTES SUBSTRAT**
METHOD FOR DECORATING SUBSTRATES AND DECORATED SUBSTRATE
PROCÉDÉ PERMETTANT DE DÉCORER DES SUBSTRATS ET SUBSTRAT DÉCORÉ

(30) Priorität: 15.10.2013 DE 102013111378
(43) Veröffentlichungstag der Anmeldung: 24.08.2016
(73) Patentinhaber: Marabu GmbH & Co. KG, 71732 Tamm (DE)
(72) Erfinder: SCHÄFER, Wolfgang, 74321 Bietigheim-Bissingen (DE); RODRIGO-FUENTES, Markus, 74348 Lauffen am Neckar (DE); HEHL-HEINZ, Martin, 56244 Ötzingen (DE)
(74) Vertreter: Patentanwälte Behrmann Wagner PartG mbB
(86) Internationale Anmeldenummer: PCT/EP2014/071091
(87) Internationale Veröffentlichungsnummer: WO 2015/055437

(56) Entgegenhaltungen:
- EP-A1- 1 806 327
- DE-A1- 19 951 404
- GB-A- 2 353 532
- US-A- 4 012 552

## Beschreibung

Die Erfindung betrifft ein Verfahren zur Dekoration von Substraten, insbesondere Verpackungen aus unlackiertem oder lackiertem Glas, Kunststoff, Papier oder Karton gemäß dem Oberbegriff des Anspruchs 1, des Anspruchs 3 oder des Anspruchs 5 sowie ein, bevorzugt mit einem derartigen Verfahren hergestelltes, dekoriertes Substrat gemäß Anspruch 13.

Zur Dekoration von beispielsweise Trinkgläsern oder Glasflaschen ist es bekannt, diese mit UV-härtbaren Glasdruckfarben zu bedrucken, insbesondere im Siebdruckverfahren. Dabei ist es möglich, an mehreren hintereinander angeordneten Druckstationen unterschiedlich farbige Druckfarben zu drucken, um somit ein Gesamtdruckbild zu erzeugen, welches aus unterschiedlichen Druckmustern zusammengesetzt ist. Kritisch bei dem Bedrucken von Glas ist es, eine gute Haftung und Kratzbeständigkeit, chemische Beständigkeit sowie Nasshaftung des Druckmusters zu erzielen. Sehr gute Ergebnisse können dabei mit UV-härtbaren Glasdruckfarben und Glasdrucklacken der Anmelderin gemäß der EP 1 806 327 B1 erzielt werden. Bei den Bunttönen (gelb, orange, rot, blau und grün) sowie Schwarz und Weiß lassen sich sehr brillante Farbtöne erzielen. Metallicfarbtöne werden typischerweise aus Bronzen (Silbermetallic aus Aluminiumbronzen, Gold aus CuZn, Bronzen und farbige Metallicbronzen durch Überlackierung mit hochtransparenten Buntfarben wie z.B. Gelb oder Rot etc. hergestellt. Nachteilig ist hierbei für die Getränke- und Kosmetikindustrie die unzureichende Brillanz der gedruckten Metallicfarbtöne. Deshalb werden heute zur Dekoration von hochwertig aussehenden Trinkgläsern immer noch "keramische Druckfarben (sogenannte Glanzedelmetallpräparate, siehe Technische Information Nr. 1.4/4 von z.B. W.C. Heraeus, Heraeusstrasse 12-14, D-62540 Hanau) eingesetzt, die nach dem Einbrennen eine extrem hohe Brillanz aufweisen. Nachteile dieser "keramischen Druckfarben" ist der durch die Verwendung von Edelmetallen sehr hohe Preis, die für den Einbrennvorgang benötigten hohen Temperaturen (400 - 700 °C) sowie die aufwendige Kontrolle des Einbrennprozesses. Alternativ können auch thermoplastische Glanzedelmetallpräparate und Dekorfarben (siehe technische Information Nr. 1.22/4 von W.C. Heraeus) eingesetzt werden. Nachteil dieser Systeme ist, dass die thermoplastischen Glanzedelmetallpräparate und Dekorfarben bei Raumtemperatur fest sind und vor dem Druck auf ca. 65 - 75 °C erwärmt werden müssen, damit sie verdruckbar werden. Zusätzlich besitzen Sie auch noch alle bei den "keramischen Farben" erwähnten Nachteile.

Immer häufiger wird deshalb zur Dekoration von Substraten, insbesondere Glasflaschen ein Heißprägeverfahren eingesetzt, wobei hierzu eine Heißprägefolie unter Druck und Temperatur gegen das Substrat gepresst wird. Das Heißprägen unter Verwendung von Heißprägefolien ist deutlich wirtschaftlicher als die obigen Verfahren und liefert hoch brillante, fast mit den Glanzedelmetallpräparaten vergleichbare Überzüge. Der Stand der Technik benutzt zum Heißprägen Temperaturen zwischen 220 °C und 300 °C, um eine optimale Übertragung der Heißprägefolie auf der UV-härtenden Glasdruckfarbe bzw. dem Glasdrucklack zu gewährleisten.

Die Heißprägefolie umfasst dabei in der Regel auf einer dem Substrat zugewandten Seite eine Heißkleberschicht, auf welcher sich wiederum der aufzuprägende dekorative Überzug befindet. Zwischen dem dekorativem Überzug und einer Trägerfolie, beispielsweise einer Polyesterfolie der Heißprägefolie befindet sich eine Trennschicht zum erleichterten Ablösen der Trägerfolie von dem aufgeprägten Überzug nach Beendigung des Prägevorgangs.

Insbesondere beim direkten Prägen auf Glassubstraten ist die Haftung des dekorativen Überzugs bzw. der Heißklebeschicht der Heißprägefolie für industrielle Anwendungen nicht ausreichend.

Zu diesem Zweck ist es bekannt geworden, zunächst auf das Glassubstrat eine sogenannte Klebstoffdruckfarbe in Form eines Musters aufzubringen, auf welche dann der dekorative Überzug geprägt wird. Entsprechende Verfahren sind beispielsweise in der EP 06 263 54 B1 (Kamen et al.) und den darin zitierten Japanischen Patentveröffentlichungen No. JP-A 59 184 746 und No. JP-A 57 152 992 beschrieben. Nachteil der EP 06 263 54 B1 ist, dass bei den angeführten Verfahren die Druckfarben nicht in dem für kommerzielle Zwecke erforderlichen Maße an dem Glassubstrat haften (siehe auch DE 695 18 016 T2 von Kamen et al., 3. Abschnitt) Hinsichtlich weiterer bekannter, verdruckbarer Klebstofftinten als Haftvermittlerschicht zwischen Glassubstrat und Heißprägefolie wird beispielsweise auf die US 5,391,247 A sowie die US 5,585,153 A verwiesen. Letztgenannte Klebstofffarben sind strahlenhärtbar. Bei diesen bekannten Klebstoffdruckfarben besteht das Problem einer geringen Reaktivität (Beispiel 1, 2 und 4), einer vergleichsweise geringen Kratzfestigkeit sowie einer vergleichsweise geringen Chemikalienbeständigkeit, etwa für den Fall, dass eine Heißprägung auf Parfüm- oder Kosmetikflaschen aufgebracht werden soll.

Ein Problem dieser Verfahren besteht zudem dann, wenn aufwändige Dekorationen gewünscht sind, die neben einem heißgeprägten Überzug ein, beispielsweise farbiges Druckmuster benachbart, d.h. in einem Bereich neben dem Überzug aufweisen sollen. Um zu vermeiden, dass die Heißprägefolie bzw. deren dekorativer Überzug auf sämtlichen Druckmustern haftet, müssten zum Erhalten einer entsprechend aufwändigen Dekoration Heißprägestempel eingesetzt werden, deren Umfangskontur der Kontur des aufzuprägenden Überzugs entsprechen müsste, um ein Anpressen der Heißprägefolie gegen nicht zu beprägende Druckmuster zu vermeiden. Der Einsatz sogenannter kontinuierlicher Prägeverfahren, bei denen mit einer rotierenden Prägewalze gearbeitet wird, wäre nicht möglich ohne sämtliche Druckmuster zu beprägen. Der Einsatz von Prägestempeln ist jedoch aus vielerlei Gründen nachteilig. So muss für jede zu prägende Überzugsform ein eigener Stempel hergestellt bzw. eingesetzt werden. Darüber hinaus ist der Heißprägeprozess unter Verwendung eines Prägestempels langsamer und kostenintensiver.

Aus der DE 199 51 404 A1 ist ein Verfahren zur Herstellung der Deckplatte einer Leuchtreklame bekannt. Hierzu wird zunächst ein Farbmuster auf ein Substrat gedruckt und deckungsgleich ein hochtransparenter Klarlack auf dieses Muster aufgebracht. In einem darauffolgenden Schritt wird eine Prägefolie aufgeprägt, die nicht auf dem Klarlack haftet, so dass ein Gesamtbild resultiert, das aus der Prägefolie und den über den Klarlack ausgesparten Bereichen besteht.

Die DE 10 2004 041 868 B3 beschreibt eine Transferfolie für Inmold-Labeling-Verfahren, wobei die Transferfolie Strukturelemente zur dreidimensionalen Strukturierung von Spritzgussteilen aufweist.

Aus der US 4,012,552 A ist ein Verfahren gemäß dem Oberbegriff des Anspruchs 1, des Anspruchs 3 und des Anspruchs 5 bekannt. Bei dem bekannten Verfahren werden zwei Druckzusammensetzungen eingesetzt, wobei einige Druckzusammensetzungen eine Druckfarbe und die andere der Druckzusammensetzungen ein reiner Haftkleber ist. Nach dem Druckvorgang wird in einem Heißprägeverfahren ein dekorativer Überzug appliziert, der nur auf dem reinen gedruckten Haftkleber anhaftet.

Die EP 1 806 327 B1 beschreibt eine UV-härtende Glasdruckfarbe sowie einen UV-härtenden Glasdrucklack samt Verfahren zum Bedrucken von Glassubstraten.

Ausgehend von dem vorgenannten Stand der Technik liegt der Erfindung die Aufgabe zugrunde ein Verfahren zur Dekoration von, insbesondere dreidimensionalen, Substraten anzugeben, mit welchen auf einem Substrat ein dekoratives Bild erzeugbar ist, welches neben, d.h. benachbart zu gedruckten, insbesondere farbigen Musterabschnitten dekorative, heißgeprägte Überzugsabschnitte aufweist, wobei sich das Verfahren durch eine hohe Geschwindigkeit auszeichnen soll und der Einsatz von üblicherweise vertikal verstellbaren Druckstempeln bevorzugt vermieden wird. Dabei soll sich die geprägte Dekoration bevorzugt durch eine hohe Kratzfestigkeit und/oder Chemikalienbeständigkeit auszeichnen. Ferner besteht die Aufgabe darin, ein entsprechendes optimiertes, dekoriertes Substrat anzugeben.

Diese Aufgabe wird hinsichtlich des Verfahrens mit den Merkmalen der Ansprüche 1, 3 und 5 und hinsichtlich des Substrates mit den Merkmalen des Anspruchs 13 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, auf einem Substrat mindestens ein erstes dekoratives Muster mit einer ersten strahlenhärtbaren, bevorzugt UV-härtbaren (alternativ beispielsweise elektronenstrahlhärtbaren), Druckfarbenzusammensetzung aufzudrucken, wobei das erste dekorative Muster nach Fertigstellung des gesamten Dekorationsprozesses, insbesondere an der Außenseite des Substrates weiterhin sichtbar sein soll.

Unter einer Druckfarbenzusammensetzung werden dabei pigmenthaltige, d.h. farbige Systeme verstanden.

Es können auch mehrere solche dekorative Muster aus, insbesondere unterschiedlich farbigen, strahlenhärtbaren Druckfarbenzusammensetzungen aufgedruckt werden, die sich dadurch auszeichnen, dass diese nicht überprägt werden sollen. Ferner wird mindestens ein zweites dekoratives Muster mit einer zweiten strahlenhärtbaren, bevorzugt UV-härtbaren (alternativ beispielsweise elektronenstrahlhärtbaren), Druckfarbenzusammensetzung auf das Substrat aufgebracht und zwar, bezogen auf die Gesamtdekoration zumindest bereichsweise bzw. zumindest abschnittsweise in einem Bereich neben dem ersten Muster. Dabei ist die Druckreihenfolge grundsätzlich gleichgültig, d.h. das zweite Muster kann auch vor dem ersten Muster gedruckt werden. Das mindestens eine zweite dekorative Muster zeichnet sich dadurch aus, dass dieses mit einem dekorativen Überzug, insbesondere in der Kontur des zweiten Musters in einem späteren Heißprägeschritt überprägt werden soll.

Das Merkmal der zumindest abschnittsweisen Anordnung des zweiten dekorativen Musters neben dem ersten Muster dient dazu sicherzustellen, dass das erste Muster, zumindest teilweise, auch nach dem Heißprägeprozess noch als solches (neben der Heißprägung, d.h. dem geprägten dekorativen Überzug) sichtbar bleibt. Selbstverständlich können mehrere zweite dekorative Muster gedruckt werden, die dann jeweils, insbesondere in einem gemeinsamen Prägeschritt überprägt werden.

Erfindungsgemäß hat das zweitdekorative Muster in erster Linie die Funktion eines Haftvermittlers oder einer Klebstofffarbe, welche bei hohen Produktionsgeschwindigkeiten (2400 - 7200 Takte/h) zum einen eine gute Haftung, hohe Kratzfestigkeit und Chemikalienbeständigkeit und zum anderen bei dem Heißprägeprozess eine höhere Affinität zu der Heißprägefolie aufweist als das mindestens eine erste dekorative Muster.

Vor dem Heißprägeschritt werden die gedruckten Muster strahlengehärtet, insbesondere durch die Verwendung von undotierten oder dotierten Quecksilberdampflampen oder LED Lampen UV-gehärtet, wobei es besonders bevorzugt ist, dass nach dem Drucken eines Musters und vor dem Drucken des weiteren Musters die Strahlenhärtung des gerade gedruckten Musters erfolgt. Denkbar ist jedoch auch eine gemeinsame Strahlenhärtung von mindestens zwei Mustern, insbesondere sämtlichen Mustern vor dem Heißprägeschritt.

Erfindungsgemäß ist nun weiter vorgesehen, dass sich die Glasübergangstemperatur der strahlengehärteten zweiten Druckfarbenzusammensetzung, d.h. des zweiten, später zu beprägenden Musters unterscheidet von der Glasübergangstemperatur der ersten stahlengehärteten Druckfarbenzusammensetzung, d.h. des ersten dekorativen Musters und zwar derart, dass die Glasübergangstemperatur der zweiten strahlgehärteten Druckfarbenzusammensetzung niedriger ist als die der ersten strahlengehärteten Druckfarbenzusammensetzung um hiermit zu erreichen, dass bei einer entsprechend eingestellten Heißprägetemperatur des Prägewerkzeugs das zweite dekorative Muster vor dem ersten dekorativen Muster erweicht. Die Glasübergangstemperatur ist dabei die Temperatur, bei der ganz oder teilweise amorphe Polymere von einem glasartigen oder hartelastischen, vergleichsweise spröden Zustand in einen flexiblen, flüssigen oder gummielastischen Zustand übergehen. Die Bestimmung der Glasübergangstemperatur erfolgt bevorzugt mit der dynamischen Differenzkalometrie (DSC). Hierbei wird die Wärmekapazität in Abhängigkeit von der Temperatur erfasst.

Zur Herabsetzung der Glasübergangstemperatur eignen sich beispielsweise wärmeaktivierbare Haftklebstoffe auf Basis UV-vernetzender Polymere/Monomere, wie sie beispielsweise von den Firmen Kiwo Kissel + Wolf GmbH, Collano Adhesives AG, Novamelt GmbH und der Panacol-Elosol GmbH vertrieben werden. Insbesondere geeignet sind dabei Kiwoprint UV 85 und Kiwoprint UV 92, wobei auch andere siebdruckfähige UV-Haftklebstoffe zur Herabsetzung der Glasübergangstemperatur eingesetzt werden können.

Auch ist es möglich, UV-vernetzbares Polyacrylat wie z. B. die acResin UV Produkte der Fa. BASF, die aus Acryl Copolymeren bestehen und eine einpolymersierte Photoreaktive Gruppe beinhalten, zu verwenden. Optional können zusätzliche Additive zu den substratspezifischen Farben oder Lacken zugesetzt werden, bevorzugt zusätzlich ein Oligomer mit UVvernetzbaren funktionellen Gruppen, die mit dem Polyacrylat reaktionsfähig sind, wie dies beispielsweise in der EP 1 469 036 B1 beschrieben ist. Bevorzugt wird eine wie dort beschrieben ausgebildete Zusammensetzung einer entsprechenden Grundzusammensetzung (übliche, substratspezifische Farbe oder Lack), die speziell auf das Substrat abgestimmt ist, beigesetzt.

In der DE 198 17 193 B4 ist ein strahlungs- und/oder wärmehärtbarer Haftklebstoff auf Basis eines difunktionellen acrylierten aromatischen Polyurethans in Kombination mit (2-Hydroxylpropyl)-acrylat/methacrylat beschrieben. Sowohl die EP 1 469 036 B1 als auch die DE 198 17 193 B4 beschreiben einen, im erfindungsgemäßen Verfahren verwendbaren, wärmeaktivierbaren Haftklebstoff.

Auf das wie vorstehend bedruckte Substrat bzw. gegen das erste und das zweite Muster wird nun durch Anwendung von Druck und Temperatur eine Heißprägefolie gepresst, die neben dem aufzuprägenden dekorativen Überzugsmaterial bevorzugt eine Trägerfolie, beispielsweise eine Polyesterfolie umfasst. Bevorzugt befindet sich zwischen Überzugsmaterial und Trägerfolie eine Trennschicht. Noch weiter bevorzugt befindet sich auf der Außenseite auf dem Überzugsmaterial eine Haftvermittlerschicht, insbesondere eine Heißkleberschicht um beim Heißprägen das Überzugsmaterial auf dem zweiten Muster zu fixieren.

Die Druckbeaufschlagung erfolgt mittels eines Prägewerkzeugs, insbesondere mittels einer rotierenden Prägewalze, wobei bei dem Heißprägeschritt das Überzugsmaterial aufgrund der bei gegebener Heißprägetemperatur höheren Klebeneigung des zweiten dekorativen Musters nur auf diesem und nicht auf dem mindestens einen ersten dekorativen Muster anhaftet, so dass nach dem Heißprägeprozess das erste Druckmuster neben dem aufgeprägten dekorativen Überzug sichtbar bleibt. Beim Prägevorgang erfährt die Heißprägefolie sowohl im Bereich des ersten Musters als auch im Bereich des zweiten Musters einen Gegendruck vom Substrat oder einer Gegendruckwalze.

Nach erfolgtem Aufprägen wird, insbesondere nach einer kurzen Abkühlstrecke eine Trägerfolie, insbesondere eine Polyesterfolie der Heißprägefolie von dem auf dem zweiten Muster aufgeprägten dekorativen Überzug abgelöst. In einem Bereich oberhalb des ersten Musters bleibt Überzugsmaterial mangels Anhaftung an dem ersten Muster an der Trägerfolie haften. Bevorzugt wird die Trägerfolie aufgewickelt.

Bevorzugt umfasst das zum Prägen verwendete Überzugsmaterial (Heissprägefolie) eine Metallschicht, insbesondere eine Aluminiumschicht, die dem Prägefoliendruck einen charakteristischen metallischen Spiegelglanz verleiht. Diese Metallschicht ist bevorzugt im Hochvakuum aufgedampft. Die Farbbestimmende Lackschicht liegt als hochtransparenter Lack über der Aluminiumschicht und kann bei Bedarf auch farblos sein, um den metallischen Ton der Metallschicht, insbesondere der Aluminiumschicht im Wesentlichen unverändert zu belassen. Durch eine unterschiedliche Tönung der bevorzugt eingesetzten Lasurlacke können mit den verschiedenen Farben der Prägefolien Farbtöne von Gold und Bronze bis zu satten, bunten Metallicfarben erzielt werden. Ganz besonders bevorzugt schützt die Farbbestimmende Lackschicht der eingesetzten Lasurlacke auf dem fertigen Prägefoliendruck das Überzugmaterial gegen mechanische Beanspruchung.

Bevorzugt wird als Heißprägefolie die Folie GXO der Firma Payer Graphic AG oder die Folie GO der Firma Payer Graphic AG eingesetzt. Alternativ können Heißprägefolien der Firma CerFoils mit der Bezeichnung 5100, 5200 und 5300 für Glassubstrate sowie die Typen 1100, 1200, 1300 und 1600 für Polyolefin Materialien verwendet werden. Eine weitere Alternative stellen die Heißprägefolien der Firma Technofoil Srl mit der Bezeichnung Silkfoil für 3 D Metalliceffekte oder Flexfoil für unebene Oberflächen beim Substrat dar.

Ganz besonders bevorzugt werden die relevanten Heißprägeprozessparameter Prägetemperatur (Temperatur des Prägewerkzeugs, insbesondere einer Prägewalze) und die Anpressdauer, d.h. bei einer Walze die Geschwindigkeit, mit der die Substrate an der Walze vorbei transportiert werden so eingestellt, dass während des Heißprägeverfahrensschrittes die strahlengehärtete zweite Druckfarbenzusammensetzung des zweiten Musters, zumindest im Bereich ihrer Oberfläche auf eine Temperatur oberhalb der Glasübergangstemperatur der strahlengehärteten zweiten Druckfarbenzusammensetzung erhitzt wird, so dass das zweite Druckmuster zumindest im Bereich seiner Oberfläche erweicht und gleichzeitig die Glasübergangstemperatur des ersten bedruckten Musters, d.h. der strahlengehärteten ersten Druckfarbenzusammensetzung nicht erreicht wird, so dass das erste dekorative Muster bevorzugt nicht erweicht oder zumindest nicht in einem solchen Maß wie das zweite Muster.

Besonders bevorzugt ist es, wie bereits angedeutet, wenn als Prägewerkzeug eine rotierende Prägewalze eingesetzt wird, um somit in einem kontinuierlichen Prozess prägen zu können, ganz besonders bevorzugt in einem kontinuierlichen Abrollprozess. Die bevorzugten Shore Härten der Prägewalzen liegen bevorzugt zwischen 30 - 100 Shore, besonders bevorzugt zwischen 55 - 70 Shore.

Für den Fall des Vorsehens von mehreren dekorativen, insbesondere unterschiedlich farbigen dekorativen Mustern, die nach dem Prägevorgang sichtbar sein sollen, ist es bevorzugt, wenn die Glasübergangstemperatur des mindestens einen, bevorzugt ausschließlich einen, zweiten dekorativen Musters geringer ist, insbesondere deutlich geringer ist als jedes der nachher noch sichtbaren, insbesondere unterschiedlich farbigen, Muster.

Ganz besonders bevorzugt ist es, wenn die Glasübergangstemperatur der strahlengehärteten zweiten Druckfarbenzusammensetzung um mindestens 10°C, bevorzugt um mindestens 20°C, noch weiter bevorzugt um mindestens 30°C, ganz besonders bevorzugt um mindestens 40°C, noch weiter bevorzugt um mindestens 50°C geringer ist als die Glastemperatur der strahlengehärteten ersten Druckfarbenzusammensetzung (oder ggf. weiterer vorgesehener, später noch sichtbarer Druckmuster).

Besonders bevorzugt ist es, wenn die Prägetemperatur des Prägewerkzeugs bei dem Heißprägeschritt auf Glasartikel zwischen 80°C und 250°C beträgt, weiter bevorzugt zwischen 100°C und 220°C, noch weiter bevorzugt zwischen 120°C und 180°C. Für Kunststoffsubstrate oder Papier werden bevorzugt Temperaturen zwischen 80 °C und 220 °C benutzt. Die Prägedauer wird dabei so eingestellt, dass die Temperatur des zweiten Druckmusters über deren Glastemperatur steigt, während die Temperatur des ersten Druckmusters unterhalb ihrer (höheren) Glasübergangstemperatur bleibt. Besonders bevorzugt trägt die Glasübergangstemperatur des zweiten Druckmusters zwischen etwa 20°C und etwa 80°C.

Ein weiterer Vorteil der Erfindung besteht darin, dass die Heißprägetemperatur im Vergleich zum Stand der Technik deutlich gesenkt und damit der Energie und Kostenaufwand reduziert werden kann. Darüber hinaus wird ein größeres Prozessfenster durch die Verringerung der Heißprägetemperatur erreicht.

Im Hinblick auf die konkrete Ausgestaltung des zu bedruckenden Substrates gibt es unterschiedliche Möglichkeiten. Dies kann grundsätzlich zweidimensional sein, ist jedoch bevorzugt dreidimensional und ganz besonders bevorzugt ein Verpackungsbehälter. Das Substratmaterial, zumindest im Bereich seiner zu bedruckenden Oberfläche kann beispielsweise unlackiertes oder lackiertes Glas, Kunststoff, Papier oder Karton sein. Besonders zweckmäßig ist es zur Erzielung besonders guter kratzfester Eigenschaften bevorzugt, wenn die eingesetzten Druckfarbenzusammensetzungen speziell auf das jeweilige Substrat abgestimmt sind, um somit besonders gut auf dem Substrat zu haften.

Die Glasübergangstemperatur kann dabei im Vergleich zu den üblichen substratspezifischen Farben, beispielsweise durch den Zusatz von wärmeaktivierbaren Haftklebstoffen auf Basis UV-vernetzender Polymere/Monomere reduziert werden. Besonders gute Erfahrungen wurden dabei durch den Zusatz von Kiwoprint UV 85 und Kiwoprint UV 92 (siebdruckfähige, wärmeaktivierbare Haftklebstoffe auf Basis UV-vernetzender Polymere/Monomere der Firma Kiwo Kissel + Wolf) zu einer Glasdruckfarbe gemacht, wie diese beispielsweise in der EP 1 806 327 B1 der Anmelderin beschrieben ist.

Wie erwähnt, ist es bevorzugt die erste und die zweite, strahlenhärtbare Druckfarbenzusammensetzung auf das zu bedruckende Substrat abzustimmen, um dadurch eine optimierte Haftung zu erzielen. Bevorzugt umfasst dabei die zweite Druckfarbenzusammensetzung Substanzen, insbesondere einen wärmeaktivierbaren Haftklebstoff auf Basis UV-vernetzender Polymere/Monomere (Schmelzkleberkomponente), die die Glasübergangstemperatur auf den gewünschten Wert einstellt.

Eine Glasdruckfarbe, als Grundzusammensetzung, zeichnet sich aus durch ein nicht vernetzbares Polymer auf Basis Bisphenol A gelöst in einem Monomer, mindestens ein weiteres Harz mit funktionellen Gruppen, mindestens einem Monomer, Additive und mindestens einem radikalischen Photoinitiator.

Eine Kunststofffarbe, insbesondere als Grundzusammensetzung, zeichnet sich insbesondere aus durch Oligomere auf Basis von Epoxy-, Urethan- und/oder Polyesteracrylat sowie Methaccrylat, mindestens ein mono- und/oder di- und/oder trifunktionelles Monomer, Additive und mindestens einem radikalischen Photoinitiator.

Eine Papier- oder Kartonfarbe , insbesondere als Grundzusammensetzung zeichnet sich insbesondere aus durch Oligomere auf Basis von Epoxy- und/oder Urethan- und/oder Polyesteracrylat sowie Methacrylat und/oder Butylmethacrylat, mindestens einem mono- und/oder difunktionellem Monomer, Additive und mindestens einem radikalischen Photoinitiator.

Grundsätzlich wird dabei unter einer Farbe eine Druckfarbenzusammensetzung mit Pigmenten und bei einem Lack eine pigmentfreie Druckfarbenzusammensetzung verstanden.

Eine wie zuvor erläuterten substratspezifischen Farbe wird zur Einstellung der Glasübergangstemperatur ein wärmeaktivierbarer Haftklebstoff auf Basis UV-vernetzender Polymere/Monomere oder Polymere aus der Gruppe der Klebstoffharze wie z. B. Polyacrylate, Polyurethanacrylate und monofunktionelle Acrylat- und/oder Methacrylat Monomere zu gesetzt. Bevorzugt wird die Glasübergangstemperatur der zweiten Druckfarbenzusammensetzung eingestellt durch Zugabe eines wärmeaktivierbaren Haftklebstoffes auf Basis UV-vernetzender Polymere/Monomere zu einer, substratspezifischen Grundzusammensetzung, insbesondere einer Glasdruckfarbe, einer Kunststoffdruckfarbe oder einer Papier- oder Kartondruckfarbe. Die Einstellung der Glasübergangstemperatur kann werksseitig erfolgen, jedoch besonders bevorzugt ist es dabei, wenn die Einstellung der Glasübergangstemperatur nicht werkseitig beim Farbenhersteller erfolgt, sondern von dem Dekorateur bzw. Drucker im Rahmen des Druckverfahrens, insbesondere unmittelbar vor dem Druckvorgang vorgenommen wird, damit die für ein gutes Druckergebnis optimale Zugabemenge spezifisch für einen Druckauftrag an der Druckmaschine ermittelt werden kann.

Erfindungsgemäß beträgt der Gewichtsanteil des wärmeaktivierbaren Haftklebstoffs auf Basis UV-vernetzender Polymere/Monomere in der zweiten Druckfarbenzusammensetzung zwischen 10% und 25%. Hieraus folgt, dass der restliche Gewichtsanteil zwischen 75 und 90%, ganz besonders bevorzugt aus der Grundzusammensetzung besteht. Im Bereich zwischen 1% und 25% ist die Oberfläche der UV gehärteten zweiten Druckfarbenzusammensetzung absolut klebfrei. Die Überprüfung der Haftung ergibt GT0, die Kratzfestigkeit ist sehr gut und vergleichbar mit der ersten Druckfarbenzusammensetzung. Die MEK Abriebtest mit dem Taber Abraser ergibt ebenfalls Werte, die vergleichbar mit der ersten Druckfarbenzusammensetzung sind. Im 24 h Wasserlagerungstest zeigen sich keine Unterschiede zwischen der ersten und zweiten Druckfarbenzusammensetzung. Zugabemengen des wärmeaktivierbaren Haftklebstoffs auf Basis UV-vernetzender Polymere/Monomere größer als 25% führen mit steigender Zugabemenge zu stärkerer Klebrigkeit der Oberfläche der gehärteten zweiten Druckfarbenzusammensetzung. Dadurch reduziert sich die Kratzfestigkeit, die chemische Beständigkeit und es Verschlechtern sich die Werte beim MEK Abriebtest mit dem Taber Abraser sowie die Wasserlagerungsergebnisse. Das Heissprägen ist bis zu einer Zugabemenge von bis zu 80% durchaus noch möglich.

Für die Bedruckung von Glassubstraten zur Erzielung einer besonders hohen Kratzfestigkeit und gleichzeitigen Chemikalienbeständigkeit hat es sich als besonders vorteilhaft herausgestellt, wenn die Grundzusammensetzung für die zweite Druckfarbenzusammensetzung, zu welcher ein wärmeaktivierbarer Haftklebstoff auf Basis UV-vernetzender Polymere/Monomere, insbesondere Kiwoprint UV 85 oder Kiwoprint UV 92 zugesetzt wird, als strahlenhärtbares, insbesondere UV-härtbares System ausgebildet ist. Dabei enthält die zweite Grundzusammensetzung bevorzugt mindestens einen radikalischen Fotoinitiator, jedoch keinen kationischen Fotoinitiator sowie ein Epoxidharz auf Basis von Bisphenol A, gelöst in einem UV-härtbaren Monomer sowie ein Harz mit funktionellen Gruppen, das freie funktionelle Hydroxy- und/oder Epoxid- und/oder Säure- und/oder Säureanhydrid und/oder Acrylatgruppen aufweist. Ferner enthält die zweite Druckfarbenzusammensetzung bevorzugt ein Wachs. Das Vorsehen von ausschließlich radikalischen Fotoinitiatoren verhindert eine Vernetzung des Epoxidharzes auf Basis von Bisphenol A mit den enthaltenen Monomeren mit dem Ziel, das Epoxydharz (lediglich) physikalisch in die entstehende Netzmatrix einzubetten. Radikalische Fotoinitiatoren spalten dabei im Gegensatz zu kationischen Fotoinitiatoren die Epoxygruppe des Epoxidharzes nicht. Ganz besonders bevorzugt enthält die zweite Grundzusammensetzung zudem keinen Aminhärter, d.h. keine aliphatischen primären Amine/Diamine oder Amin-/Diaminderivate bzw. cycloaliphatische oder aromatische Amine/Diamine.

Einer derartigen Grundzusammensetzung wird bevorzugt ein wärmeaktivierbarer Haftklebstoff auf Basis UV-vernetzender Polymere/Monomere, insbesondere Kiwoprint UV 85 bzw Kiwoprint UV 92 zugesetzt. Erfindungsgemäß beträgt der Gewichtsanteil am wärmeaktivierbaren Haftklebstoff auf Basis UV-vernetzender Polymere/Monomere an der zweiten, strahlenhärtbaren Grundzusammensetzung zwischen 10 % bis 25 %. Zur Einstellung der Glasübergangstemperatur kommen weiterhin folgende wärmeaktivierbare Haftklebstoffe auf Basis UV-vernetzender Polymere/Monomere in Betracht: Novarad RCL 6015 von der Novomelt GmbH sowie von der Firma Panacol-Elosol GmbH aus der Vitralit Serie Z. B. die Produkte UV 2771 und UV 7561, ohne jedoch auf diese beschränkt zu sein.

Im Hinblick auf Beispielrezepturen zur Ausgestaltung der Grundzusammensetzung wird auf die EP 1 806 327 B1 verwiesen.

Besonders zweckmäßig ist es, weiterhin, wenn das Wachs der zweiten Grundzusammensetzung aus der nachfolgenden Gruppe gewählt ist: Polyethylenwachs, modifiziertes Polyethylenwachs, High Density Polyethylen-Wachse, Polymer-Kieselsäure-Verbindungen, Mikronisierte Polyoefin-Wachse, Fischer-Tropsch-Wachse, Mikronisierte Polytetrafuoroethylen-Wachse, Mikronisierte Polyteraffluoroethylen/Polyethylen-Wachse, Amid-Wachse, Camaubawachse, Montanwachse, Mikronisierte Ester-Wachse mit UV-reaktiven Gruppen, Paraffin-Wachse, Polypropylen-Wachse, Sprühmikronisierte Polyolefin-Wachse.

Weiter bevorzugt ist das Wachs in einer Menge von 0,1 Gew-% bis 10 Gew-% Trockengewicht, vorzugsweise 0,5 Gew-% bis 5,0 Gew-%, noch weiter bevorzugt 1,0 Gew-% bis 3,0 Gew-% bezogen auf das Gewicht der zweiten Druckfarbenzusammensetzung verwendet.

Besonders zweckmäßig hat es sich herausgestellt, wenn das Epoxydharz der Grundzusammensetzung auf der Basis. von Bisphenol A ein Gewichtsmittel des Molekulargewichts im Bereich zwischen 500 bis 1500, insbesondere zwischen 700 und 1500 aufweist.

Noch weiter bevorzugt ist es, wenn es sich bei dem Harz mit den funktionellen Gruppen um ein Melaminacrylat, ein säuremodifiziertes Polyesteracrylat und/oder Epoxydacrylat handelt.

Besonders zweckmäßig ist es, wenn das Epoxidharz auf Basis von Bisphenol A in einer Menge von 1 bis 90 Gew-%, bevorzugt 5 bis 20 Gew-%, ganz besonders bevorzugt 11 bis 14 Gew-% Trockengewicht, bezogen auf das Gewicht der zweiten Grundzusammensetzung verwendet wird.

Noch weiter bevorzugt ist es, wenn das Harz mit funktionellen Gruppen in einer Menge von 5 bis 90 Gew-%, bevorzugt 5 bis 40 Gew-% und insbesondere 10 bis 30 Gew-% Trockengewicht, bezogen auf das Gewicht der Grundzusammensetzung verwendet wird.

Ganz besonders bevorzugt ist es, wenn der oder die radikalischen Fotoinitiatoren in einer Gesamtmenge von 1 bis 12 Gew-%, insbesondere 3 bis 7 Gew-%, bezogen auf das Gewicht der Grundzusammensetzung vorliegen.

Besonders zweckmäßig ist es, wenn das UV-härtbare Monomer Hexandioldiacrylat ist.

Zuvor wurden vorteilhafte Ausgestaltungen der Grundzusammensetzung beschrieben. Es ist auch denkbar die zweite strahlenhärtbare Druckfarbenzusammensetzung nicht durch Mischen einer (fertigen) Grundzusammensetzung mit einem, insbesondere fertigen, wärmeaktivierbaren Haftklebstoff auf Basis UV-vernetzender Polymere/Monomere zu erhalten. Auch für diesen Fall ist es vorteilhaft, wenn die zweite strahlenhärtbare Druckfarbenzusammensetzung eine Zusammensetzung wie die Grundzusammensetzung aufweist, ergänzt um mindestens eine Komponente (wärmeaktivierbare Haftklebstoff Komponente) zur Einstellung der Glasübergangstemperatur.

Im Hinblick auf die anzuwenden Druckverfahren gibt es unterschiedliche Möglichkeiten. Grundsätzlich möglich ist zum Aufbringen des ersten oder zweiten Musters Siebdruck, Rotationssiebdruck, Flexodruck und Offsetdruck zu verwenden.

Besonders zweckmäßig ist es, wenn das mindestens eine erste Muster und das mindestens eine zweite Muster, insbesondere das ausschließlich eine zweite Muster mit einer Druckvorrichtung auf das Substrat aufgebracht werden, die eine erste Druckstation, insbesondere eine erste Siebdruckstation zum Aufdrucken des ersten Musters aufweist. Bevorzugt ist der ersten Druckstation eine Strahlenhärtungseinheit, insbesondere ein/oder mehrere UV-Strahler, zugeordnet, mit welchem das erste Muster vor dem Drucken des zweiten Musters ausgehärtet werden kann.

Ferner umfasst die Vorrichtung eine zweite, vor oder nach der ersten Druckstation angeordnete zweite Druckstation, insbesondere eine Siebdruckstation zum Aufdrucken und vorzugsweise Strahlenhärten des zweiten Musters. Darüber hinaus umfasst die Vorrichtung bevorzugt eine den Druckstationen in einer Förderrichtung des Substrates nachgeordnete Heißprägestation, insbesondere eine Abrollprägestation, mit einem eine Prägerolle umfassenden Prägewerkzeug.

Darüber hinaus führt die Erfindung auf ein, mit einem erfindungsgemäßen Dekorierverfahren dekoriertes Substrat, umfassend eine bedruckte Oberfläche aus unlackiertem und lackiertem Glas, Kunststoff, Papier oder Karton. Die Oberfläche des Substrates ist mit einem ersten, dekorativen, farbigen Druckmuster aus einer strahlengehärteten Druckfarbenzusammensetzung versehen. Benachbart zu dieser Druckfarbenzusammensetzung, d.h. zum ersten Druckmuster befindet sich ein heißgeprägter dekorativer Überzug.

Der dekorative Überzug und das Substrat nehmen sandwichartig ein zweites dekoratives Muster zwischen sich auf, welches aus einer zweiten strahlengehärteten Druckfarbenzusammensetzung besteht, deren Glasübergangstemperatur niedriger ist als die Glasübergangstemperatur der strahlengehärteten ersten Druckfarbenzusammensetzung.

Dabei stimmt verfahrensbedingt die Umfangskontur des zweiten Druckmusters zumindest näherungsweise mit der Umfangskontur des heißgeprägten Überzugs überein.

Insbesondere beim Prägen von Glassubstraten, insbesondere Glasflaschen aus einem transparenten, d.h. zumindest teilweise durchsichtigen, ggf. jedoch nicht zwingend eingefärbten Glas oder weißen Glas kann es vorteilhaft sein, wenn die zweite Druckfarbenzusammensetzung eine Farbe aufweist, die zumindest näherungsweise gleich ist, wie eine Farbe des dekorativen Überzugs, um den Eindruck zu erwecken, der dekorative Überzug befindet sich unmittelbar auf dem Glassubstrat, für den Fall, dass man durch das Glassubstrat, quasi von hinten hindurchschaut.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Draufsicht auf ein dekoriertes Substrat,
- Fig. 2: eine Schnittansicht durch das Substrat entlang der Schnittlinie A-A gemäß Fig. 1, und
- Fig. 3: eine Druckvorrichtung zur Durchführung des erfindungsgemäßen Dekorierverfahrens.

In den Figuren sind gleiche Elemente und Elemente mit der gleichen Funktion mit den gleichen Bezugszeichen gekennzeichnet.

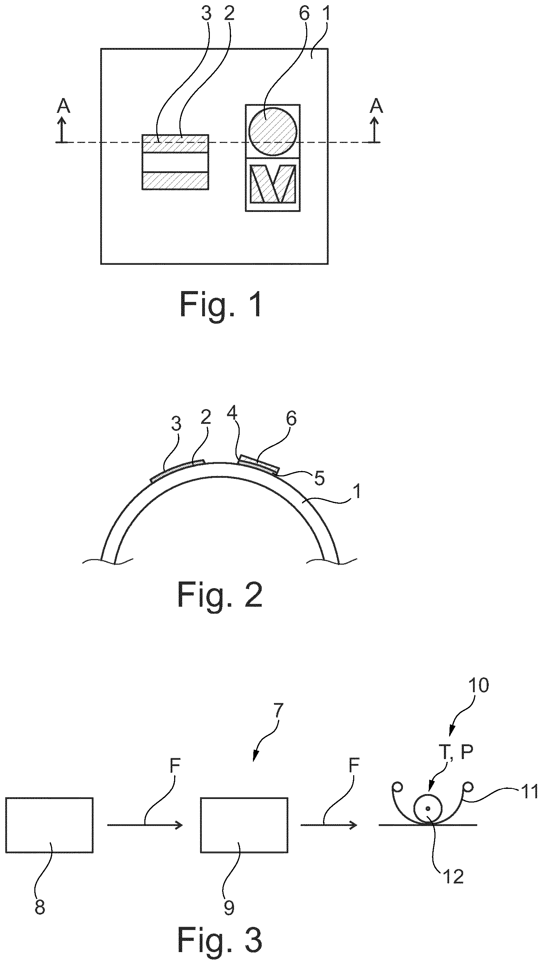

In den Fig. 1 und 2 ist ein dekoriertes Substrat 1 aus Glas gezeigt. Es handelt sich um ein dreidimensionales Substrat, beispielsweise eine Flasche oder einen Becher.

Auf dem Substrat 1, genauer auf der Oberfläche des Substrates 1 ist ein erstes Muster 2 aus einer ersten Druckfarbenzusammensetzung 3 aufgedruckt. Ferner befindet sich auf dem Substrat 1 neben dem ersten Muster 2 ein zweites Muster 4 aus einer zweiten Druckfarbenzusammensetzung 5 beide Druckfarbenzusammensetzungen 3, 5 sind strahlengehärtet, hier mittels UV Quecksilberdampflampen, dotierter Quecksilberdampflampen oder LED Strahler.

Wie sich aus einer Zusammenschau der Fig. 1 und 2 ergibt, befindet sich unmittelbar oberhalb des zweiten Musters 4 ein durch Heißprägen aufgebrachter dekorativer Überzug 6, umfassend eine farbbestimmende Lackschicht sowie eine darunter befindliche Aluminiumschicht, welche über eine Haftkleberschicht der ursprünglichen Heißprägefolie auf dem zweiten Muster 4 haftet. Das zweite Muster 4 hat dieselbe Umfangskontur wie der dekorative Überzug 6.

Der dekorative Überzug 6 wurde durch Heißprägen aufgebracht und zwar mittels einer rotierenden Prägewalze in einem kontinuierlichen Abrollverfahren, wobei während des Heißprägens die Heißprägefolie mit Druck und Temperatur sowohl gegen das erste als auch gegen das zweite Muster 2, 4 gepresst wurde. Der dekorative Überzug 6 hat sich jedoch nur im Bereich des zweiten Musters 4 von der Trägerfolie gelöst, da die Heißprägetemperatur und die Prägegeschwindigkeit so eingestellt waren, dass beim Heißprägen sich zwar das zweite Muster, genauer die UV-gehärtete zweite Druckfarbenzusammensetzung 5 über ihre Glasübergangstemperatur erhitzt hat, nicht jedoch die erste Druckfarbenzusammensetzung 3, wobei die Glasübergangstemperatur der UV-gehärteten zweiten Druckfarbenzusammensetzung deutlich geringer ist als die Glasübergangstemperatur der ersten UV-gehärteten Druckfarbenzusammensetzung.

In Fig. 3 ist stark schematisiert eine Vorrichtung zur Dekoration von Substraten gezeigt. Diese umfasst zwei kombinierte Druck- und Härtestationen 8, 9, wobei mit einer der beiden Stationen das erste Muster 2 und mit der anderen das zweite Muster 4 bedruckt werden können, wobei die Reihenfolge grundsätzlich beliebig ist. Bevorzugt ist es jedoch, wenn das zweite Muster 4 mit der in Förderrichtung weiter hinten gelegenen Druckstation gedruckt wird. In dem Beispiel handelt es sich um Siebdruckstationen, wobei auch andere Druckverfahren einsetzbar sind.

Jedenfalls wandert das Substrat während des Dekorationsprozesses in einer Förderrichtung F. Nach Fertigstellung beider Druckmuster und Aushärtung derselben wird eine Heißprägestation 10 erreicht, hier eine Abrollstation, bei welcher gegen beide Muster eine Heißprägefolie 11 flächig mittels eines als Prägewalze ausgebildeten Prägewerkzeugs 12 unter Druck und Temperatureinwirkung gepresst wird. Im Bereich des eine niedrige Glasübergangstemperatur aufweisenden zweiten Musters, löst sich von einer Trägerfolie der Heißprägefolie der dekorative Überzug ab und verbindet sich bzw. klebt an dem zweitem Muster, während die überbleibende Trägerfolie wieder aufgewickelt wird.

In dem konkreten Ausführungsbeispiel handelt es sich bei der zweiten Druckfarbenzusammensetzung um eine Mischung aus einer Glasdruckfarbe (75 % bis 90 Gew-%) als Grundzusammensetzung, zu der ein Haftklebstoff (10 % bis 25 Gew-%) gemäß der EP 1 806 327 B1 in dem konkreten Ausführungsbeispiel Kiwoprint UV 85 beigemischt wurde.

### Bezugszeichenliste

- 1: Substrat
- 2: erstes Muster
- 3: erste Druckfarbenzusammensetzung
- 4: zweites Muster
- 5: zweite Druckfarbenzusammensetzung
- 6: dekorativer Überzug
- 7: Vorrichtung
- 8: kombinierte Druck- und Strahlungsstation
- 9: kombinierte Druck- und Strahlungsstation
- 10: Heißprägestation
- 11: Heißprägefolie
- 12: Prägewerkzeug

## Patentansprüche

1. Verfahren zur Dekoration von, insbesondere dreidimensionalen, Substraten, insbesondere Verpackungen, mit den Schritten:
- Drucken mindestens eines ersten dekorativen Musters (2) mit einer ersten Druckfarbenzusammensetzung (3) auf das Substrat (1),
- Drucken mindestens eines zweiten dekorativen Musters (4) mit einer zweiten Druckfarbenzusammensetzung (5) auf das Substrat (1), zumindest abschnittsweise in einem Bereich neben dem ersten Muster (2), zeitlich vor, nach oder während des Druckens des ersten Musters,
wobei die strahlengehärtete zweite Druckfarbenzusammensetzung (5) eine niedrigere Glasübergangstemperatur aufweist als die strahlengehärtete erste Druckfarbenzusammensetzung (3), und wobei mittels eines Heißprägeverfahrens (10), insbesondere eines Abrollverfahrens, ein dekorativer Überzug auf das zweite Muster (4) appliziert wird, wobei hierzu ein dekoratives Überzugsmaterial umfassende Heißprägefolie, insbesondere in einem kontinuierlichen Abrollprozess, unter Einwirkung von Hitze und Druck mittels eines Prägewerkzeugs (12), insbesondere einer rotierenden Prägewalze, gegen das bedruckte Substrat (1) zumindest abschnittsweise im Bereich des ersten und zweiten Musters (4) gepresst wird, so dass der dekorative Überzug an dem zweiten Muster (4), nicht jedoch am ersten Muster (2) haftet,
**dadurch gekennzeichnet,**
**dass** das Substrat ein Glas ist, dass die erste und die zweite Druckfarbenzusammensetzung (3, 5) strahlenhärtbar, bevorzugt UV-härtbar sind, und dass die erste und zweite Druckfarbenzusammensetzung (3, 5), bevorzugt unmittelbar nach dem Drucken des jeweiligen Musters, strahlengehärtet werden, und dass die zweite Druckfarbenzusammensetzung (5) eine Grundzusammensetzung mit mindestens einem radikalischen Photoinitiator und keinem kationischen Photoinititor umfasst, und dass die Grundzusammensetzung mindestens ein Epoxidharz auf der Basis von Bisphenol A umfasst, das gelöst ist in einem UV-härtenden Monomer, sowie ein Harz mit funktionellen Gruppen, das freie funktionelle Hydroxy-, Epoxid-, Säure-, Säureanhydrid- und/oder Acrylatgruppen sowie weiter ein Wachs umfasst, und dass beim Bestrahlen der zweiten Druckfarbenzusammensetzung (5) das Epoxidharz auf Basis von Bisphenol A nicht mit dem UV-härtbaren Monomer vernetzt sondern lediglich physikalisch eingebettet wird, und dass ein Gewichtsanteil eines wärmeaktivierbaren Haftkleberstoffs an der zweiten Druckfarbenzusammensetzung (5) zwischen 10% und 25% beträgt.

2. Verfahren nach Anspruch 1,
**dadurch gekennzeichnet,**
**dass** das zu bedruckende Substrat ein Trinkglas, Parfümflasche oder eine Glasflasche, bevorzugt eine Getränkeflasche oder eine Parfumflasche ist, und/oder die erste Druckfarbenzusammensetzung (3) eine erste Glasfarbe oder ein erster Glaslack ist und die zweite Druckfarbenzusammensetzung (5) eine Glasfarbe oder ein Glaslack, und dass der wärmeaktivierbare Haftklebstoff auf Basis UV-vernetzender Polymere/Monomere, insbesondere aus der Gruppe der Polyurethanacrylate, Polyacrylate und monofunktionelle (Meth-) Acrylatmonomere ausgebildet ist.

3. Verfahren zur Dekoration von, insbesondere dreidimensionalen, Substraten, insbesondere Verpackungen, mit den Schritten:
- Drucken mindestens eines ersten dekorativen Musters (2) mit einer ersten Druckfarbenzusammensetzung (3) auf das Substrat (1), wobei das Substrat ein Kunststoff ist,
- Drucken mindestens eines zweiten dekorativen Musters (4) mit einer zweiten Druckfarbenzusammensetzung (5) auf das Substrat (1), zumindest abschnittsweise in einem Bereich neben dem ersten Muster (2), zeitlich vor, nach oder während des Druckens des ersten Musters,
wobei die strahlengehärtete zweite Druckfarbenzusammensetzung (5) eine niedrigere Glasübergangstemperatur aufweist als die strahlengehärtete erste Druckfarbenzusammensetzung (3), und wobei mittels eines Heißprägeverfahrens (10), insbesondere eines Abrollverfahrens, ein dekorativer Überzug auf das zweite Muster (4) appliziert wird, wobei hierzu ein dekoratives Überzugsmaterial umfassende Heißprägefolie, insbesondere in einem kontinuierlichen Abrollprozess, unter Einwirkung von Hitze und Druck mittels eines Prägewerkzeugs (12), insbesondere einer rotierenden Prägewalze, gegen das bedruckte Substrat (1) zumindest abschnittsweise im Bereich des ersten und zweiten Musters (4) gepresst wird, so dass der dekorative Überzug an dem zweiten Muster (4), nicht jedoch am ersten Muster (2) haftet,
**dadurch gekennzeichnet,**
**dass** die als Kunststofffarbe ausgebildete erste und die als Kunststofffarbe ausgebildete zweite Druckfarbenzusammensetzung (3, 5) strahlenhärtbar, bevorzugt UV-härtbar sind, und dass die erste und zweite Druckfarbenzusammensetzung (3, 5), bevorzugt unmittelbar nach dem Drucken des jeweiligen Musters, strahlengehärtet werden, und dass ein Gewichtsanteil eines wärmeaktivierbaren Haftkleberstoffs an der zweiten Druckfarbenzusammensetzung (5) zwischen 10% und 25% beträgt, wobei der Haftklebstoff so gewählt wird, dass eine Herabsetzung der Glasübergangstemperatur der zweiten Druckfarbenzusammensetzung durch die Zugabe des Haftklebstoffs erreicht wird.

4. Verfahren nach Anspruch 3,
**dadurch gekennzeichnet,**
**dass** das zu bedruckende Substrat (1) Kunststofftube oder ein Kunststoffetikett ist, und/oder dass der wärmeaktivierbare Haftklebstoff auf Basis UV-vernetzender Polymere/Monomere, insbesondere aus der Gruppe der Polyurethanacrylate, Polyacrylate und monofunktionelle (Meth-) Acrylatmonomeren gebildet ist.

5. Verfahren zur Dekoration von, insbesondere dreidimensionalen, Substraten, insbesondere Verpackungen, mit den Schritten:
- Drucken mindestens eines ersten dekorativen Musters (2) mit einer ersten Druckfarbenzusammensetzung (3) auf das Substrat (1), wobei das Substrat Papier oder Karton ist,
- Drucken mindestens eines zweiten dekorativen Musters (4) mit einer zweiten Druckfarbenzusammensetzung (5) auf das Substrat (1), zumindest abschnittsweise in einem Bereich neben dem ersten Muster (2), zeitlich vor, nach oder während des Druckens des ersten Musters,
wobei die strahlengehärtete zweite Druckfarbenzusammensetzung (5) eine niedrigere Glasübergangstemperatur aufweist als die strahlengehärtete erste Druckfarbenzusammensetzung (3), und wobei mittels eines Heißprägeverfahrens (10), insbesondere eines Abrollverfahrens, ein dekorativer Überzug auf das zweite Muster (4) appliziert wird, wobei hierzu ein dekoratives Überzugsmaterial umfassende Heißprägefolie, insbesondere in einem kontinuierlichen Abrollprozess, unter Einwirkung von Hitze und Druck mittels eines Prägewerkzeugs (12), insbesondere einer rotierenden Prägewalze, gegen das bedruckte Substrat (1) zumindest abschnittsweise im Bereich des ersten und zweiten Musters (4) gepresst wird, so dass der dekorative Überzug an dem zweiten Muster (4), nicht jedoch am ersten Muster (2) haftet,
**dadurch gekennzeichnet,**
**dass** die als Papier- oder Kartondruckfarbe ausgebildete erste und die als Papier- oder Kartondruckfarbe ausgebildete zweite Druckfarbenzusammensetzung (3, 5) strahlenhärtbar, bevorzugt UV-härtbar sind, und dass die erste und zweite Druckfarbenzusammensetzung (3, 5), bevorzugt unmittelbar nach dem Drucken des jeweiligen Musters, strahlengehärtet werden, und dass ein Gewichtsanteil eines wärmeaktivierbaren Haftkleberstoffs an der zweiten Druckfarbenzusammensetzung (5) zwischen 10% und 25% beträgt, wobei der Haftklebstoff so gewählt wird, dass eine Herabsetzung der Glasübergangstemperatur der zweiten Druckfarbenzusammensetzung durch die Zugabe des Haftklebstoffs erreicht wird.

6. Verfahren nach Anspruch 5,
**dadurch gekennzeichnet,**
**dass** das zu bedruckende Substrat ein Etikett oder eine Faltschachtel, beispielsweise für Weinflaschen oder für Süßwaren oder Konditoreiwaren ist, und/oder dass der wärmeaktivierbare Haftklebstoffkomponent auf Basis UV-vernetzender Polymere/Monomere, insbesondere aus der Gruppe der Polyurethanacrylate, Polyacrylate und monofunktionelle (Meth-) Acrylatmonomeren ausgebildet ist.

7. Verfahren nach einem der vorhergehenden Ansprüche,
**dadurch gekennzeichnet,**
**dass** die Prozessparameter des Heißprägens, insbesondere die Prägetemperatur und die Anpressdauer so gewählt werden, dass die strahlengehärtete zweite Druckfarbenzusammensetzung (5) des zweiten Musters (4) auf eine Temperatur, insbesondere eine Oberflächentemperatur, über ihrer Glasübergangstemperatur erhitzt wird und die strahlengehärtete erste Druckfarbenzusammensetzung (3) des ersten Musters (2) auf eine Temperatur, insbesondere eine Oberflächentemperatur unterhalb ihrer Glasübergangstemperatur erhitzt wird.

8. Verfahren nach einem der vorhergehenden Ansprüche,
**dadurch gekennzeichnet,**
**dass** die Glasübergangstemperatur der strahlengehärteten zweiten Druckfarbenzusammensetzung (5) um mindestens 10°C, bevorzugt um mindestens 20°C, noch weiter bevorzugt um mindestens 30°C, ganz besonders bevorzugt um mindestens 40°C, weiter bevorzugt um mindestens 50°C geringer ist als die Glasübergangstemperatur der strahlengehärteten ersten Druckfarbenzusammensetzung (3), bevorzugt als die Glasübergangstemperatur sämtlicher etwaiger weiterer, nicht mit Heißprägefolie zu beprägenden Muster.

9. Verfahren nach einem der vorhergehenden Ansprüche,
**dadurch gekennzeichnet,**
**dass** die erste Druckfarbenzusammensetzung (3) und die zweite Druckfarbenzusammensetzung (5) vor dem Heißprägeschritt durch Bestrahlen, insbesondere Bestrahlung mittels undotierter oder dotierter Quecksilberdampflampen oder LED Strahler gehärtet werden, insbesondere während oder unmittelbar nach dem Drucken des jeweiligen Musters oder in einem gemeinsamen Bestrahlungsschritt.

10. Verfahren nach einem der vorhergehenden Ansprüche,
**dadurch gekennzeichnet,**
**dass** die Glasübergangstemperatur der zweiten Druckfarbenzusammensetzung (5) eingestellt wird, insbesondere direkt vor dem Druckvorgang durch Zugabe des wärmeaktivierbaren Haftklebstoffes auf Basis von UVvernetzenden Polymeren/Monomeren zu der Grundzusammensetzung, insbesondere einer Glasdruckfarbe, einer Kunststoffdruckfarbe oder einer Papier- oder Kartondruckfarbe.

11. Verfahren nach einem der vorhergehenden Ansprüche,
**dadurch gekennzeichnet,**
**dass** das erste und/oder das zweite Muster (2, 4) mittels Siebdruck, Rotationssiebdruck, Flexodruck und Offsetdruck auf das Substrat gedruckt werden.

12. Verfahren nach einem der vorhergehenden Ansprüche,
**dadurch gekennzeichnet,**
**dass** die Muster (2, 4) mit einer Vorrichtung auf das Substrat (1) aufgebracht werden, die eine erste Druckstation zum Aufdrucken und vorzugsweise Strahlenhärten des ersten Musters (2) und eine zweite Druckstation (5) zum Aufdrucken und vorzugsweise Strahlenhärten des zweiten Musters (4) aufweist sowie eine den Druckstationen in einer Förderrichtung des Substrates nachgeordnete Heißprägestation, insbesondere eine Abrollprägestation, mit einem eine Prägerolle umfassenden Prägewerkzeug.

13. Dekoriertes Substrat dekoriert mit einem Dekorierverfahren nach einem der vorhergehenden Ansprüche, umfassend ein Substrat, mit einer Oberfläche aus unlackiertem oder lackiertem Glas, Kunststoff, Papier oder Karton, wobei auf der Oberfläche des Substrates ein erstes dekoratives, farbiges, Druckmuster aus einer strahlengehärteten Druckfarbenzusammensetzung vorgesehen ist und, zumindest abschnittsweise, benachbart zu dem ersten Druckmuster ein heißgeprägter dekorativer Überzug unter welchem ein, die gleiche Umfangskontur wie der dekorative Überzug aufweisendes zweiten, farbiges Druckmuster aus einer zweiten strahlengehärteten Druckfarbenzusammensetzung, wobei die Glasübergangstemperatur der strahlengehärteten zweiten Druckfarbenzusammensetzung niedriger ist als die Glasübergangstemperatur der strahlengehärteten ersten Druckfarbenzusammensetzung.

14. Substrat nach Anspruch 13,
**dadurch gekennzeichnet,**
**dass** die zweite Druckfarbenzusammensetzung (5) die gleiche Farbe wie der dekorative Überzug aufweist, wobei bevorzugt das Substrat (1), insbesondere eine Glas- oder Kunststoffflasche, transparent ist.

## Claims

1. A method for decorating, in particular three-dimensional, substrates, in particular packaging, comprising the following steps:
- printing at least one first decorative pattern (2) with a first printing ink composition (3) onto the substrate (1),
- printing at least one second decorative pattern (4) with a second printing ink composition (5) onto the substrate (1), at least sectionally in a region adjacent to the first pattern (2), temporarily before, after or during the printing of the first pattern,
the radiation-cured second printing ink composition (5) having a lower glass transition temperature than the radiation-cured first printing ink composition (3), and a hot stamping method (10), in particular an unwinding method, being used to apply a decorative coating to the second pattern (4) for which purpose hot stamping foil comprising a decorative coating material is pressed with exposure to heat and pressure, in particular in a continuous unwinding process, by means of a stamping tool (12), in particular a rotating stamping roller, against the printed substrate (1), at least sectionally in the region of the first and second pattern (4), the decorative coating thus adhering to the second pattern (4), but not to the first pattern (2),
**characterized in that**
that the substrate is a glass, that the first and the second printing ink compositions (3, 5) are radiation-curable, preferably UV curable, and that the first and second printing ink compositions (3, 5) are radiation-cured, preferably immediately after printing the respective pattern, and that the second printing ink composition (5) comprises a base composition having at least one radical photo initiator and no cationic photo initiator, and that the base composition comprises at least one epoxy resin based on bisphenol A, which is in solution in a UV-curing monomer, and also a resin having functional groups and comprising free functional hydroxyl, epoxide, acid, acid anhydride and/or acrylate groups, and further comprising a wax, and that on irradiation of the second printing ink composition (5), the epoxy resin based on bisphenol A is not crosslinked with the UV-curable monomer, but is instead merely physically embedded, and that a weight fraction of a heat-activatable pressure-sensitive adhesive in the second printing ink composition (5) is between 10 % and 25 %.

2. The method according to claim 1,
**characterized in that**
the substrate to be printed is a drinking glass, perfume bottle or a glass bottle, preferably a drink bottle or a perfume bottle, and/or the first printing ink composition (3) is a first glass color or a first glass lacquer and the second printing ink composition (5) is a glass color or a glass lacquer, and that the heat-activatable pressure-sensitive adhesive is formed on the basis of UV-crosslinking polymers/monomers, in particular from the group of polyurethane acrylates, poly acrylates and monofunctional (meth-)acrylate monomers.

3. A method for decorating, in particular three-dimensional, substrates, in particular packaging, comprising the following steps:
- printing at least one first decorative pattern (2) with a first printing ink composition (3) onto the substrate (1), the substrate being a plastic,
- printing at least one second decorative pattern (4) with a second printing ink composition (5) onto the substrate (1), at least sectionally in a region adjacent to the first pattern (2), temporarily before, after or during the printing of the first pattern,
the radiation-cured second printing ink composition (5) having a lower glass transition temperature than the radiation-cured first printing ink composition (3), a hot stamping method (10), in particular an unwinding method, being used to apply a decorative coating to the second pattern (4) for which purpose hot stamping foil comprising a decorative coating material is pressed with exposure to heat and pressure, in particular in a continuous unwinding process, by means of a stamping tool (12), in particular a rotating stamping roller, against the printed substrate (1), at least sectionally in the region of the first and second pattern (4), the decorative coating thus adhering to the second pattern (4), but not to the first pattern (2),
**characterized in that**
that the first printing ink composition (3) realized as a plastic color and the second printing ink composition (5) realized as a plastic color are radiation-curable, preferably UV curable, and that the first and second printing ink compositions (3, 5) are radiation-cured, preferably immediately after printing the respective pattern, and that a weight fraction of a heat-activatable pressure-sensitive adhesive in the second printing ink composition (5) is between 10 % and 25 %, the pressure-sensitive adhesive being selected in such a manner that a reduction of the glass transition temperature of the second printing ink composition is realized by adding the pressure-sensitive adhesive.

4. The method according to claim 3,
**characterized in that**
the substrate (1) to be printed is a plastic tube or a plastic label, and/or that the heat-activatable pressure-sensitive adhesive is formed on the basis of UV-crosslinking polymers/monomers, in particular from the group of polyurethane acrylates, poly acrylates and monofunctional (meth-)acrylate monomers.

5. A method for decorating, in particular three-dimensional, substrates, in particular packaging, comprising the following steps:
- printing at least one first decorative pattern (2) with a first printing ink composition (3) onto the substrate (1), the substrate being paper or cardboard,
- printing at least one second decorative pattern (4) with a second printing ink composition (5) onto the substrate (1), at least sectionally in a region adjacent to the first pattern (2), temporarily before, after or during the printing of the first pattern,
the radiation-cured second printing ink composition (5) having a lower glass transition temperature than the radiation-cured first printing ink composition (3), a hot stamping method (10), in particular an unwinding method, being used to apply a decorative coating to the second pattern (4) for which purpose hot stamping foil comprising a decorative coating material is pressed with exposure to heat and pressure, in particular in a continuous unwinding process, by means of a stamping tool (12), in particular a rotating stamping roller, against the printed substrate (1), at least sectionally in the region of the first and second pattern (4), the decorative coating thus adhering to the second pattern (4), but not to the first pattern (2),
**characterized in that**
that the first printing ink composition (3) realized as a paper or cardboard color and the second printing ink composition (5) realized as a paper or cardboard color are radiation-curable, preferably UV curable, and that the first and second printing ink compositions (3, 5) are radiation-cured, preferably immediately after printing the respective pattern, and that a weight fraction of a heat-activatable pressure-sensitive adhesive in the second printing ink composition (5) is between 10 % and 25 %, the pressure-sensitive adhesive being selected in such a manner that a reduction of the glass transition temperature of the second printing ink composition is realized by adding the pressure-sensitive adhesive.

6. The method according to claim 5,
**characterized in that**
the substrate to be printed is a label or a folding box, for example for wine bottles or for confectionery or pastries, and/or that the heat-activatable pressure-sensitive adhesive component is formed on the basis of UV-crosslinking polymers/monomers, in particular from the group of polyurethane acrylates, poly acrylates and monofunctional (meth-)acrylate monomers.

7. The method according to any one of the preceding claims,
**characterized in that**
the operating parameters of the hot stamping, in particular the stamping temperature and the duration of pressure, are selected in such a manner that the radiation-cured second printing ink composition (5) of the second pattern (4) is heated to a temperature, in particular a surface temperature, above its glass transition temperature and the radiation-cured first printing ink composition (3) of the first pattern (2) is heated to a temperature, in particular a surface temperature, below its glass transition temperature.

8. The method according to any one of the preceding claims,
**characterized in that**
the glass transition temperature of the radiation-cured second printing ink composition (5) is at least 10 °C, preferably at least 20 °C, more preferably at least 30 °C, particularly preferably at least 40 °C, more preferably at least 50 °C lower than the glass transition temperature of the radiation-cured first printing ink composition (3), preferably than the glass transition temperature of all possible additional patterns not to be stamped with hot stamping foil.

9. The method according to any one of the preceding claims,
**characterized in that**
before the hot stamping step, the first printing ink composition (3) and the second printing ink composition (5) are cured by irradiating, in particular by irradiating by means of undoped or doped mercury vapor lamps or LED emitters, in particular during or immediately after printing the respective pattern or in a joint irradiation step.

10. The method according to any one of the preceding claims,
**characterized in that**
the glass transition temperature of the second printing ink composition (5) is adjusted, in particular immediately before the printing process, by adding the heat-activatable pressure-sensitive adhesive based on UV-crosslinking polymers/monomers to the base composition, in particular a glass printing color, a plastic printing color or a paper or cardboard printing color.

11. The method according to any one of the preceding claims,
**characterized in that**
the first and/or the second pattern (2, 4) are printed onto the substrate by means of screen printing, rotary screen printing, flexographic printing and offset printing.

12. The method according to any one of the preceding claims,
**characterized in that**
the patterns (2, 4) are applied to the substrate (1) with an apparatus which has a first printing station for printing and preferably radiation-curing the first pattern (2) and a second printing station (5) for printing and preferably radiation-curing the second pattern (4), and also a hot stamping station, in particular an unwinding stamping station, having a stamping tool comprising a stamping roller, downstream of the printing stations in a substrate conveying direction.

13. A decorated substrate decorated by a decorating method according to any one of the preceding claims, comprising a substrate having a surface made of unlacquered or lacquered glass, plastic, paper or cardboard, there being provided on the surface of the substrate a first decorative, colored printed pattern composed of a radiation-cured printing ink composition and, at least sectionally adjacent to the first printed pattern, a hot-stamped decorative coating under which a second printed pattern having the same circumferential contour as the decorative coating and composed of a second radiation-cured printing ink composition, the glass transition temperature of the radiation-cured second printing ink composition being lower than the glass transition temperature of the radiation-cured first printing ink composition.

14. The substrate according to claim 13,
**characterized in that**
the second printing ink composition (5) has the same color as the decorative coating, the substrate (1), in particular a glass or plastic bottle, being preferably transparent.

## Revendications

1. Procédé de décoration de substrats, notamment tridimensionnels, notamment d'emballages, comprenant les étapes :
- imprimer sur le substrat (1) au moins un premier motif décoratif (2) ayant une première composition d'encre d'impression (3),
- imprimer sur le substrat (1), au moins par sections dans une zone située à côté du premier motif (2), au moins un deuxième motif décoratif (4) ayant une deuxième composition d'encre d'impression (5) avant, après ou pendant l'impression du premier motif,
la deuxième composition d'encre d'impression (5) durcie par rayonnement ayant une température de transition vitreuse inférieure à celle de la première composition d'encre d'impression (3) durcie par rayonnement, et un revêtement décoratif étant appliqué sur le deuxième motif (4) par un procédé d'estampage à chaud (10), notamment un procédé de déroulage, un film pour estampage à chaud comprenant un matériau de revêtement décoratif étant appuyé contre le substrat (1) imprimé, au moins par sections dans la zone du premier et deuxième motif (4), notamment dans un procédé de déroulage continu, sous l'effet de la chaleur et de la pression au moyen d'un outil d'estampage (12), notamment un rouleau d'estampage rotatif, de sorte que le revêtement décoratif adhère au deuxième motif (4) et non pas au premier motif (2),
**caractérisé en ce que**
le substrat est un verre, que la première et la deuxième composition d'encre d'impression (3, 5) peuvent être durcies par rayonnement, de préférence par rayonnement UV, et que la première et la deuxième composition d'encre d'impression (3, 5) sont durcies par rayonnement de préférence immédiatement après l'impression du motif respectif, et que la deuxième composition d'encre d'impression (5) est une composition de base qui comprend au moins un photoinitiateur radicalaire et aucun photoinitiateur cationique, et que la composition de base comprend au moins une résine époxyde sur la base de bisphénol A qui est dissoute dans un monomère durcissable par UV, et une résine qui a des groupes fonctionnels et qui comprend des groupes d'hydroxyde, d'époxyde, d'acide, d'anhydride d'acide et/ou d'acrylate fonctionnels et libres et la composition de base comprend aussi une cire, et que la résine époxyde sur la base de bisphénol A n'est pas réticulée avec le monomère durcissable par UV mais ladite résine époxyde est seulement intégrée de manière physique pendant le rayonnement de la deuxième composition d'encre d'impression (5), et qu'une proportion en poids d'un adhésif sensible à la pression et activable par la chaleur dans la deuxième composition d'encre d'impression (5) est entre 10 % et 25 %.

2. Procédé selon la revendication 1,
**caractérisé en ce que**
le substrat à imprimer est un verre à boire, un flacon de parfum ou une bouteille en verre, de préférence une bouteille de boisson ou un flacon de parfum, et/ou que la première composition d'encre d'impression (3) est une première couleur de verre ou un premier vernis de verre et la deuxième composition d'encre d'impression (5) est une couleur de verre ou un vernis de verre, et que l'adhésif sensible à la pression et activable par la chaleur est réalisé sur la base de polymères/monomères réticulables par UV, notamment du groupe des acrylates polyuréthanes, des polyacrylates et des monomères de (méth)acrylates monofonctionnels.

3. Procédé de décoration de substrats, notamment tridimensionnels, notamment d'emballages, comprenant les étapes :
- imprimer sur le substrat (1) au moins un premier motif décoratif (2) ayant une première composition d'encre d'impression (3), le substrat étant un plastique,
- imprimer sur le substrat (1), au moins par sections dans une zone située à côté du premier motif (2), au moins un deuxième motif décoratif (4) ayant une deuxième composition d'encre d'impression (5) avant, après ou pendant l'impression du premier motif,
la deuxième composition d'encre d'impression (5) durcie par rayonnement ayant une température de transition vitreuse inférieure à celle de la première composition d'encre d'impression (3) durcie par rayonnement, et un revêtement décoratif étant appliqué sur le deuxième motif (4) par un procédé d'estampage à chaud (10), notamment un procédé de déroulage, un film pour estampage à chaud comprenant un matériau de revêtement décoratif étant appuyé contre le substrat (1) imprimé, au moins par sections dans la zone du premier et deuxième motif (4), notamment dans un procédé de déroulage continu, sous l'effet de la chaleur et de la pression au moyen d'un outil d'estampage (12), notamment un rouleau d'estampage rotatif, de sorte que le revêtement décoratif adhère au deuxième motif (4) et non pas au premier motif (2),
**caractérisé en ce que**
la première composition d'encre d'impression (3) réalisée comme couleur de plastique et la deuxième composition d'encre d'impression (5) réalisée comme couleur de plastique peuvent être durcies par rayonnement, de préférence par rayonnement UV, et que la première et la deuxième composition d'encre d'impression (3, 5) sont durcies par rayonnement de préférence immédiatement après l'impression du motif respectif, et qu'une proportion en poids d'un adhésif sensible à la pression et activable par la chaleur dans la deuxième composition d'encre d'impression (5) est entre 10 % et 25 %, l'adhésif sensible à la pression étant choisi de telle manière qu'une réduction de la température de transition vitreuse de la deuxième composition d'encre d'impression est atteinte par l'ajout de l'adhésif sensible à la pression.

4. Procédé selon la revendication 3,
**caractérisé en ce que**
le substrat (1) à imprimer est une tube en plastique ou une étiquette en plastique, et/ou que l'adhésif sensible à la pression et activable par la chaleur est réalisé sur la base de polymères/monomères réticulables par UV, notamment du groupe des acrylates polyuréthanes, des polyacrylates et des monomères de (méth)acrylates monofonctionnels.

5. Procédé de décoration de substrats, notamment tridimensionnels, notamment d'emballages, comprenant les étapes :
- imprimer sur le substrat (1) au moins un premier motif décoratif (2) ayant une première composition d'encre d'impression (3), le substrat étant du papier ou du carton,
- imprimer sur le substrat (1), au moins par sections dans une zone située à côté du premier motif (2), au moins un deuxième motif décoratif (4) ayant une deuxième composition d'encre d'impression (5) avant, après ou pendant l'impression du premier motif,
la deuxième composition d'encre d'impression (5) durcie par rayonnement ayant une température de transition vitreuse inférieure à celle de la première composition d'encre d'impression (3) durcie par rayonnement, et un revêtement décoratif étant appliqué sur le deuxième motif (4) par un procédé d'estampage à chaud (10), notamment un procédé de déroulage, un film pour estampage à chaud comprenant un matériau de revêtement décoratif étant appuyé contre le substrat (1) imprimé, au moins par sections dans la zone du premier et deuxième motif (4), notamment dans un procédé de déroulage continu, sous l'effet de la chaleur et de la pression au moyen d'un outil d'estampage (12), notamment un rouleau d'estampage rotatif, de sorte que le revêtement décoratif adhère au deuxième motif (4) et non pas au premier motif (2),
**caractérisé en ce que**
la première composition d'encre d'impression (3) réalisée comme encre d'impression de papier ou de carton et la deuxième composition d'encre d'impression (5) réalisée comme encre d'impression de papier ou de carton peuvent être durcies par rayonnement, de préférence par rayonnement UV, et que la première et la deuxième composition d'encre d'impression (3, 5) sont durcies par rayonnement de préférence immédiatement après l'impression du motif respectif, et qu'une proportion en poids d'un adhésif sensible à la pression et activable par la chaleur dans la deuxième composition d'encre d'impression (5) est entre 10 % et 25%, l'adhésif sensible à la pression étant choisi de telle manière qu'une réduction de la température de transition vitreuse de la deuxième composition d'encre d'impression est atteinte par l'ajout de l'adhésif sensible à la pression.

6. Procédé selon la revendication 5,
**caractérisé en ce que**
le substrat à imprimer est une étiquette ou une boîte pliante, par exemple pour des bouteilles de vin ou pour des sucreries ou des confiseries, et/ou que composant adhésif sensible à la pression et activable par la chaleur est réalisé sur la base de polymères/monomères réticulables par UV, notamment du groupe des acrylates polyuréthanes, des polyacrylates et des monomères de (méth)acrylates monofonctionnels.

7. Procédé selon l'une quelconque des revendications précédentes,
**caractérisé en ce que**
les paramètres de processus d'estampage à chaud, notamment la température d'estampage et la durée de l'appui, sont choisis de telle manière que la deuxième composition d'encre d'impression (5) durcie par rayonnement du deuxième motif (4) est chauffée à une température, notamment une température de surface, supérieure à sa température de transition vitreuse et que la première composition d'encre d'impression (3) durcie par rayonnement du premier motif (2) est chauffée à une température, notamment une température de surface, inférieure à sa température de transition vitreuse.

8. Procédé selon l'une quelconque des revendications précédentes,
**caractérisé en ce que**
la température de transition vitreuse de la deuxième composition d'encre d'impression (5) durcie par rayonnement est inférieure d'au moins 10 °C, de préférence d'au moins 20 °C, plus préférentiellement d'au moins 30 °C, particulièrement préférée d'au moins 40 °C, plus préférentiellement d'au moins 50 °C, à la température de transition vitreuse de la première composition d'encre d'impression (3) durcie par rayonnement, de préférence à la température de transition vitreuse de tous les motifs éventuels additionnels qui ne sont pas estampés avec un film pour estampage à chaud.

9. Procédé selon l'une quelconque des revendications précédentes,
**caractérisé en ce que**
la première composition d'encre d'impression (3) et la deuxième composition d'encre d'impression (5) sont durcies par rayonnement, notamment par rayonnement au moyen de lampes à vapeur de mercure non-dopées ou dopées ou au moyen des projecteurs à DEL, avant l'étape d'estampage à chaud, notamment pendant ou immédiatement après l'impression du motif respectif ou dans une étape de rayonnement commune.

10. Procédé selon l'une quelconque des revendications précédentes,
**caractérisé en ce que**
la température de transition vitreuse de la deuxième composition d'encre d'impression (5) est réglée, notamment immédiatement avant le processus d'impression, par l'ajout de l'adhésif sensible à la pression et activable par la chaleur sur la base de polymères/monomères réticulables par UV à la composition de base, notamment une encre d'impression de verre, une encre d'impression de plastique ou une encre d'impression de papier ou de carton.

11. Procédé selon l'une quelconque des revendications précédentes,
**caractérisé en ce que**
le premier et/ou le deuxième motif (2, 4) est imprimé sur le substrat au moyen de la sérigraphie, de la sérigraphie rotative, de la flexographie et de l'offset.

12. Procédé selon l'une quelconque des revendications précédentes,
**caractérisé en ce que**
les motifs (2, 4) sont appliqués au substrat (1) au moyen d'un dispositif qui a une première station d'impression destinée à imprimer et, de préférence, durcir par rayonnement le premier motif (2) et une deuxième station d'impression (5) destinée à imprimer et, de préférence, durcir par rayonnement le deuxième motif (4) et une station d'estampage à chaud, notamment une station d'estampage à déroulage, qui est disposée en aval des stations d'impression dans une direction de transport du substrat et qui a un outil d'estampage qui comprend un rouleau d'estampage.

13. Substrat décoré qui est décoré au moyen d'un procédé de décoration selon l'une quelconque des revendications précédentes, comprenant un substrat qui a une surface en verre pas vernie ou vernie, en plastique pas vernie ou vernie, en papier pas vernie ou vernie ou en carton pas vernie ou vernie, un premier motif d'impression décoratif et coloré d'une composition d'encre d'impression durcie par rayonnement étant prévu sur la surface du substrat et, au moins par sections, adjacent au premier motif d'impression, un revêtement décoratif estampé par la chaleur au-dessous duquel est situé un deuxième motif d'impression coloré d'une deuxième composition d'encre d'impression durcie par rayonnement, le deuxième motif d'impression ayant le même contour circonférentiel que le revêtement décoratif, la température de transition vitreuse de la deuxième composition d'encre d'impression durcie par rayonnement étant inférieure à la température de transition vitreuse de la première composition d'encre d'impression durcie par rayonnement.

14. Substrat selon la revendication 13,
**caractérisé en ce que**
la deuxième composition d'encre d'impression (5) a la même couleur que le revêtement décoratif, le substrat (1), notamment une bouteille en verre ou en plastique, étant, de préférence, transparent.
